# EUROPÄISCHE PATENTANMELDUNG

(11) **EP 3 093 313 A1**
(43) Veröffentlichungstag der Anmeldung: **16.11.2016**
(21) Anmeldenummer: 16166026.1
(22) Anmeldetag: 19.04.2016
(51) Int. Cl.: C08K 5/00, C08K 5/092, C08K 7/14, C08L 77/00, C08L 77/02, C08L 77/06, C08K 5/053

(54) **THERMOPLASTISCHE FORMMASSEN**

(30) Priorität: 12.05.2015 EP 15167302
(71) Anmelder: LANXESS Deutschland GmbH, 50569 Köln (DE)
(72) Erfinder: JOACHIMI, Detlev, 47800 Krefeld (DE); LINDER, Thomas, 51067 Köln (DE)

(57) **Zusammenfassung**

Die vorliegende Erfindung betrifft thermostabilisierte Polyamid basierte Zusammensetzungen auf Basis von wenigstens einem Salz der Zitronensäure und Dipentaerythritol, daraus herzustellende Formmassen sowie wiederum daraus herzustellende spritzgegossene, blasgeformte oder extrudierte Erzeugnisse.

## Beschreibung

Die vorliegende Erfindung betrifft thermostabilisierte Polyamid basierte Zusammensetzungen auf Basis wenigstens eines Salzes der Zitronensäure und Dipentaerythritol, daraus herzustellende Formmassen sowie wiederum daraus herzustellende spritzgegossene, blasgeformte oder extrudierte Erzeugnisse.

Polyamide, insbesondere teilkristalline Polyamide, werden häufig als Werkstoffe für Formteile eingesetzt, die während ihrer Lebensdauer erhöhten Temperaturen über einen längeren Zeitraum ausgesetzt sind. Für eine Vielzahl von Anwendungen ist es dabei erforderlich, dass die Werkstoffe ausreichend stabil gegenüber der dabei auftretenden thermooxidativen Schädigung sind, insbesondere für Anwendungen im Motorraum von Kraftfahrzeugen.

Glasfaserverstärkte Polyamid 66-Compounds haben sich im Automobilbau für die Herstellung von thermisch hoch beanspruchten Erzeugnissen etabliert, wobei thermisch hoch Temperaturen im Bereich von 180°C bis 240°C bedeutet, Temperaturen wie sie durchaus heutzutage im Motorraum von Kraftfahrzeugen mit Verbrennungsmotoren auftreten können, insbesondere wenn es sich bei den Erzeugnissen um Turboladeluftrohre, Ansaugrohre, Ventildeckel, Ladeluftkühler oder Abdeckungen von Motoren handelt.

Aufgrund der in den letzten Jahren erfolgten Leistungssteigerung der Kraftfahrzeugtriebwerke bestehen deshalb herstellerbedingt immer höhere Anforderungen hinsichtlich der für die Herstellung dieser Erzeugnisse einzusetzenden Materialien.

Polyamide zeigen im Allgemeinen eine Verschlechterung ihrer mechanischen Eigenschaften, wenn sie über einen längeren Zeitraum erhöhten Temperaturen ausgesetzt werden. Dieser Effekt basiert primär auf der oxidativen Schädigung des Polyamids bei erhöhten Temperaturen (thermooxidative Schädigung). Ein längerer Zeitraum im Sinne der vorliegenden Erfindung bedeutet länger als 100 Stunden, erhöhte Temperaturen im Sinne der vorliegenden Erfindung bedeutet höher als 80°C.

Die Stabilität thermoplastischer Formmassen bzw. daraus hergestellter Erzeugnisse gegen thermooxidative Schädigung wird üblicherweise durch den Vergleich mechanischer Eigenschaften, insbesondere der Schlagzähigkeit, der im Zugversuch nach ISO 527 gemessenen Bruchspannung und Bruchdehnung, sowie des E-Moduls bei definierter Temperatur über einen definierten Zeitraum beurteilt.

Der thermooxidative Abbau thermoplastischer Polyamid basierter Formmassen bei erhöhten Temperaturen über einen längeren Zeitraum lässt sich generell mit Stabilisatorsystemen nicht verhindern, sondern nur zeitlich verzögern. Die Anforderungen an Polyamid basierte Formmassen bzw. an daraus herzustellende Erzeugnisse in Hochtemperaturanwendungen werden mit den aus dem Stand der Technik bekannten, thermostabilisierenden Systemen noch nicht ausreichend erfüllt. So erfahren beispielsweise die Schlagzähigkeit oder die Bruchspannung von Erzeugnissen gemäß dem Stand der Technik nach 1000h Langzeitlagerung bei Temperaturen im Bereich von 180 bis 200°C einen deutlichen Abfall auf meistens unter 50% des Ausgangswertes.

### Stand der Technik

WO 2015/011001 A1 beschreibt unter anderem Citrat enthaltende Polyamid basierte Formmassen sowie daraus herzustellende Erzeugnisse mit bereits guter thermischer Beständigkeit. Es zeigte sich jedoch, dass die Thermostabilität von Erzeugnissen hergestellt gemäß WO 2015/011001 A1 nicht immer zufriedenstellend war.

Ausgehend von diesem Stand der Technik bestand die Aufgabe der vorliegenden Erfindung darin, die Stabilisierung von Polyamiden und daraus zu fertigenden Erzeugnissen gegenüber thermooxidativer Schädigung sowie auch im Hinblick auf eine photooxidative Schädigung noch weiter zu verbessern.

### Erfindung

Die Lösung der Aufgabe und Gegenstand der vorliegenden Erfindung sind Zusammensetzungen enthaltend
A) wenigstens ein Polyamid oder Copolyamid,
B) wenigstens ein Salz der Zitronensäure,
C) Dipentaerythritol, und
D) wenigstens einen Füll- oder Verstärkungsstoff.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind. Die Salze der Zitronensäure werden im Rahmen der vorliegenden Anmeldung auch als Citrate bezeichnet, wobei der Begriff Salz auch Monohydrate und Polyhydrate umfasst. Zitierte Normen gelten in der zum Anmeldetag der vorliegenden Anmeldung gültigen Fassung.

Die erfindungsgemäßen Zusammensetzungen, die in der Kunststofftechnik zusammenfassend auch als Formmassen bezeichnet werden, fallen bei der Bearbeitung der Komponenten A) bis D) sowie ggf. E), F) und G) vorzugsweise als Granulat, in Strangform oder als Pulver an. Die Zubereitung erfolgt durch Mischen der erfindungsgemäßen Zusammensetzungen in wenigstens einem Mischaggregat, vorzugsweise einem Compounder, besonders bevorzugt einem gleichsinnig drehenden Zweiwellenextruder. Der Mischvorgang der Komponenten A) bis D), sowie gegebenenfalls wenigstens einer weiteren Komponente E), F) oder G) zur Herstellung erfindungsgemäßer Zusammensetzungen in Form von Pulvern, Granulaten oder in Strangform wird in der Kunststofftechnik oft auch als Compoundierung bezeichnet. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten A), B), C) und D) bestehen, oder aber zusätzlich zu den Komponenten A), B), C) und D) noch weitere Komponenten enthalten, vorzugsweise wenigstens eine der im Folgenden definierten Komponenten E) bis G).

Gegenstand der vorliegenden Erfindung sind deshalb auch auf den erfindungsgemäßen Zusammensetzungen basierende Formmassen und Erzeugnisse enthaltend die Komponente A) im Bereich von 15 bis 94,85 Gew.-%, die Komponente B) im Bereich von 0,05 bis 10 Gew.-%, die Komponente C) im Bereich von 0,1 bis 5 Gew.-% und die Komponente D) im Bereich von 5 bis 70 Gew.-%, wobei die Summe aller Gewichtsprozente stets 100 ergibt.

Im Falle der Formmassen sind die Komponenten A), B), C) und D) im Rahmen der angegebenen Mengenbereiche so zu variieren, dass die Summe aller Gewichtsprozente stets 100 ergibt. Im Falle der Formmassen und daraus herzustellender Erzeugnisse liegt der Anteil der Komponenten A), B), C) und D) in diesen bevorzugt im Bereich von 40 bis 100 Gew.-% vor, wobei es sich bei den übrigen Bestandteilen um Zusatzstoffe handelt, die der Fachmann entsprechend dem späteren Einsatz der Erzeugnisse auswählt, bevorzugt aus wenigstens einer der im Folgenden definierten Komponenten E) bis G). Enthalten die Formmassen zusätzlich zu den Komponenten A), B), C) und D) noch weitere Komponenten, insbesondere wenigstens eine der unten aufgeführten Komponenten E), F) und/oder G), so wird der Anteil wenigstens einer der Komponenten A), B), C) oder D), soweit reduziert, dass die Summe aller Gewichtsprozente in der Formmasse 100 ergibt.

### Bevorzugte Ausführungsformen der Erfindung

In einer bevorzugten Ausführungsform enthalten die Zusammensetzungen sowie die daraus herzustellenden Formmassen und Erzeugnisse noch E) wenigstens einen weiteren, von Komponente B) verschiedenen Thermostabilisator, vorzugsweise in Mengen im Bereich von 0,03 bis 0,5 Gew.-%, wobei in den Formmassen der Anteil wenigstens einer der Komponenten A), B), C) und D) so zu variieren ist, dass die Summe aller Gewichtsprozente 100 ergibt und als Thermostabilisator wenigstens einer aus der Gruppe der Kupferhalogenide eingesetzt wird.

In einer bevorzugten Ausführungsform enthalten die Zusammensetzungen sowie die daraus herzustellenden Formmassen und Erzeugnisse zusätzlich zu den Komponenten A) bis E) noch F) wenigstens ein Alkalimetallhalogenid, vorzugsweise in Mengen im Bereich von 0,01 bis 0,5 Gew.-%, wobei in den Formmassen der Anteil wenigstens einer der Komponenten A) bis E) so zu variieren ist, dass die Summe aller Gewichtsprozente 100 ergibt. In bevorzugter Ausführungsform werden Komponente E) und F) stets zusammen eingesetzt.

In einer bevorzugten Ausführungsform enthalten die Zusammensetzungen sowie die daraus herzustellenden Formmassen und Erzeugnisse zusätzlich zu den Komponenten A) bis F) oder anstelle der Komponenten E) und/oder F) noch G) wenigstens ein weiteres Additiv, vorzugsweise in Mengen im Bereich von 0,05 bis 5 Gew.-%, wobei in den Formmassen der Anteil wenigstens einer der Komponenten A) bis F) so zu variieren ist, dass die Summe aller Gewichtsprozente 100 ergibt.

### Komponente A)

Die als Komponente A) einzusetzenden Polyamide sind vorzugsweise amorphe Polyamide oder teilkristalline Polyamide. Besonders bevorzugt wird das erfindungsgemäße Stabilisatorsystem aus den Komponenten B) und C) bei Polyamiden angewandt, die bei Hochtemperatur-Anwendungen zum Einsatz kommen, ganz besonders bevorzugt bei teilkristallinen Polyamiden mit einem Schmelzpunkt von mindestens 180°C oder amorphen Polyamiden mit einer Glasübergangstemperatur von mindestens 150°C.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer α,ω- Aminocarbonsäure bzw. von dem davon abgeleiteten Lactam, im Falle des PA 6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976 bzw. DIN EN ISO 1874-1:2011-03.

Vorzugsweise wird als Komponente A) wenigstens ein teilkristallines Polyamid, besonders bevorzugt wenigstens Polyamid 6 (PA6) [CAS Nr. 25038-54-4] oder Polyamid 66 (PA66) [CAS Nr. 32131-17-2], insbesondere Polyamid 66, eingesetzt.

Bei den als Komponente A) vorzugsweise einzusetzenden PA 6 und PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

In einer Ausführungsform wird als Komponente A) auch ein Blend unterschiedlicher Polyamide eingesetzt.

Insbesondere besonders bevorzugt werden als Komponente A), Polyamid 6 oder Polyamid 66 mit relativen Lösungsviskositäten in m-Kresol im Bereich von 2,0 bis 4,0 eingesetzt. Insbesondere ganz besonders bevorzugt wird Polyamid 66 mit einer relativen Lösungsviskosität in m-Kresol im Bereich von 2,6 - 3,2 eingesetzt.

Bei Verfahren zur Bestimmung der relativen Lösungsviskosität werden die Durchlaufzeiten eines gelösten Polymers durch ein Ubbelohde-Viskosimeter gemessen, um anschließend den Viskositätsunterschied zwischen Polymerlösung und seinem Lösungsmittel, hier m-Kresol (1 %ige Lösung), zu bestimmen. Anwendbare Normen sind DIN 51562; DIN ISO 1628 oder entsprechende Normen. Die Viskositätsmessung im Rahmen der vorliegenden Erfindung erfolgt in Schwefelsäure mit einem Ubbelohde-Viskosimeter nach DIN 51 562 Teil 1, mit der Kapillare II bei 25°C (± 0,02°C).

Die als Komponente A) einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß bevorzugt einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Erfindungsgemäß bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische und/oder aromatische Dicarbonsäuren, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Hexamethylendiamin, 2-Methylpentan-1,5-diamin, 1,9-Nonandiamin, 2,2,4- und 2,4,4-Trimethylhexamethylendiamin, die Isomeren Diaminodicyclohexylmethan, Diaminodicyclohexylpropan, Bis-aminomethyl-cyclohexan, Phenylendiamin, Xylylendiamin, Aminocarbonsäuren, insbesondere Aminocapronsäure, oder die entsprechenden Lactame in Betracht. Copolyamide aus mehreren der genannten Monomeren sind eingeschlossen.

Erfindungsgemäß besonders bevorzugte Polyamide werden aus Caprolactam, ganz besonders bevorzugt aus ε-Caprolactam (im Falle des PA 6) hergestellt, oder aus Hexamethylendiamin (HMD) und Adipinsäure (im Falle des PA 66).

Insbesondere besonders bevorzugt sind weiterhin die meisten auf PA6, PA66 und andere auf aliphatischen oder/und aromatischen Polyamiden bzw. Copolyamiden basierenden Compounds, bei denen auf eine Polyamidgruppe in der Polymerkette 3 bis 11 Methylengruppen kommen.

### Komponente B)

Als Komponente B) wird vorzugsweise wenigstens ein Alkalimetallcitrat oder ein Eisencitrat eingesetzt. Bevorzugte Alkalimetallcitrate sind Natriumcitrat oder Trinatriumcitrat [CAS Nr. 68-04-2] oder Kaliumcitrat [CAS Nr. 6100-05-6], besonders bevorzugt Trinatriumcitrat. Im Falle des Natriumcitrats wird dieses vorzugsweise als monobasisches Natriumcitrat = Natriumdihydrogencitrat [CAS Nr. 18996-35-5] oder tribasisches Natriumcitrat-Dihydrat [CAS Nr. 6132-04-3] eingesetzt. Als Eisencitrat wird im Rahmen dieser Anmeldung vorzugsweise Ammoniumeisen(III)-citrat [CAS Nr. 1185-57-5] oder Eisen(III)citrat [CAS Nr. 3522-50-7] eingesetzt.

### Komponente C)

Als Komponente C) wird Dipentaerythritol [CAS Nr. 126-58-9] eingesetzt. Dipentaerythritol kann beispielsweise von der Firma Perstorp (Dipenta 93) bezogen werden.

### Komponente D)

Als Komponente D) werden vorzugsweise faserförmige, nadelförmige oder teilchenförmige Füll- und Verstärkungsstoffe eingesetzt. Bevorzugt werden Kohlenstofffasern, Glaskugeln, gemahlenes Glas, amorphe Kieselsäure, Calciumsilicat [CAS Nr. 1344-95-2], Calciummetasilicat [CAS Nr. 10101-39-0], Magnesiumcarbonat [CAS Nr. 546-93-0], Kaolin [CAS Nr. 1332-58-7], calciniertes Kaolin [CAS Nr. 92704-41-1], Kreide [CAS Nr.1317-65-3], gepulverter oder gemahlener Quarz [CAS Nr. 14808-60-7], Glimmer [CAS Nr. 1318-94-1], Phlogopit [CAS Nr. 12251-00-2], Bariumsulfat [CAS Nr. 7727-43-7], Feldspat [CAS Nr. 68476-25-5], Wollastonit [CAS Nr. 13983-17-0], Montmorillonit [CAS Nr. 67479-91-8] oder Glasfasern [CAS Nr. 65997-17-3] eingesetzt. Besonders bevorzugt werden Glasfasern eingesetzt, insbesondere bevorzugt Glasfasern aus E-Glas. Die faserförmigen oder teilchenförmigen Füll- und Verstärkungsstoffe sind in einer bevorzugten Ausführungsform zur besseren Verträglichkeit mit der Komponente A) mit geeigneten Oberflächenmodifizierungen, insbesondere Oberflächenmodifizierungen enthaltend Silanverbindungen versehen. Insbesondere bevorzugt werden als Komponente D) Glasfasern mit kreisförmiger Querschnittsfläche und einem Filament-Durchmesser im Bereich von 6 bis 11 µm oder Glasfasern mit flacher Gestalt und nichtkreisförmiger Querschnittsfläche eingesetzt, deren Hauptquerschnittsachse eine Breite im Bereich von 6 bis 40 µm und deren Nebenquerschnittsachse eine Breite im Bereich von 3 bis 20 µm aufweist, wobei für die Beurteilung der Zugehörigkeit eines Glasfaserproduktes zu diesem Dimensionsbereich die in den technischen Datenblättern der Glasfaser-Hersteller getroffenen Angaben heranzuziehen sind. Beispielhaft und insbesondere bevorzugt kann die Glasfaser CS7928 der Lanxess Deutschland GmbH (kreisförmiger Querschnitt, 11 µm mittlerer Durchmesser) eingesetzt werden. Querschnittsfläche bzw. Filament-Durchmesser werden im Rahmen der vorliegenden Erfindung mittels wenigstens eines optischen Verfahrens gemäß DIN 65571 bestimmt. Optische Verfahren sind a) Lichtmikroskop und Mikrometerokular (Distanzmessung Zylinderdurchmesser), b) Lichtmikroskop und Digitalkamera mit anschließender Planimetrie (Querschnittsmessung), c) Laserinterferometrie und d) Projektion.

### Komponente E)

Als Komponente E) wird wenigstens ein zur Komponente B) zusätzlicher Thermostabilisator aus der Gruppe der Kupferhalogenide eigesetzt. Vorzugsweise wird wenigstens ein Kupfer(I)halogenid eingesetzt, besonders bevorzugt wenigstens Kupfer(I)iodid [CAS Nr. 7681-65-4].

### Komponente F)

Als Komponente F) wird wenigstens ein Alkalimetallhalogenid eingesetzt. Bevorzugte Alkalimetallhalogenide sind Alkalimetallchloride, Alkalimetallbromide oder Alkalimetalliodide, besonders bevorzugt Alkalimetallhalogenide der Metalle Natrium oder Kalium, ganz besonders bevorzugt Natriumchlorid, Kaliumbromid oder Kaliumiodid, insbesondere bevorzugt Kaliumiodid [CAS Nr. 7681-11-0] oder Kaliumbromid [CAS Nr. 7758-02-3], insbesondere ganz besonders bevorzugt Kaliumbromid.

Vorzugsweise wird wenigstens ein Vertreter der Komponente E) mit wenigstens einem Vertreter der Komponente F) zusammen eingesetzt. Erfindungsgemäß bevorzugt wird Kupfer(I)iodid mit Kaliumbromid eingesetzt. In alternativer Ausführungsform wird bevorzugt Kupfer(I)iodid mit Kaliumiodid eingesetzt.

### Komponente G)

Als weiteres Additiv der Komponente G) wird vorzugsweise wenigstens eine Substanz aus der Gruppe der Thermostabilisatoren verschieden von Komponenten B) und E), UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe und Pigmente eingesetzt. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die als Komponente G) einzusetzenden Additive können alleine oder in Mischung bzw. in Form von Masterbatchen eingesetzt werden.

Erfindungsgemäß als Additive einzusetzende zusätzliche **Thermostabilisatoren,** die verschieden von den Komponenten B) und E) sind, sind vorzugsweise von Komponente F) verschiedene Metallhalogenide oder Erdalkalimetallhalogenide, bevorzugt Calciumchlorid oder Manganchlorid, sterisch gehinderte Phenole und/oder Phosphite, Phosphate, bevorzugt Dinatriumdihydrogendiphosphat, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Erfindungsgemäß als Additiv einzusetzende **UV-Stabilisatoren** sind vorzugsweise substituierte Resorcine, Salicylate, Benzotriazole oder Benzophenone.

Im Falle der als Additiv einzusetzenden **Schlagzähmodifikatoren** oder **Elastomermodifikatoren** handelt es sich vorzugsweise um Copolymerisate, die bevorzugt aus mindestens zwei der folgenden Reihe an Monomeren aufgebaut sind: Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente. Die Copolymerisate können kompatibilisierende Gruppen, bevorzugt Maleinsäureanhydrid oder Epoxid enthalten.

Erfindungsgemäß als Additiv einzusetzende **Farbstoffe** oder **Pigmente** sind vorzugsweise anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel.

Erfindungsgemäß als Additiv einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung M₉₃[Si₄O₁₀(OH)₂], das je nach Modifikation als Talk-1A im triklinen oder als Talk-2M im monoklinen Kristallsystem kristallisiert (http://de.wikipedia.org/wiki/Talkum). Erfindungsgemäß einzusetzendes Talkum kann beispielsweise als Mistron® R10 von Imerys Talc Group, Toulouse, Frankreich (Rio Tinto Group) bezogen werden.

Erfindungsgemäß als Additiv einzusetzende **Gleit-** und/oder **Entformungsmittel** sind vorzugsweise langkettige Fettsäuren, insbesondere Stearinsäure, deren Salze, insbesondere Ca- oder Zn-Stearat sowie deren Esterderivate oder Amidderivate, insbesondere Ethylen-bis-stearylamid, Glyzerintristearat, Stearylstearat, Montanesterwachse, insbesondere Ester von Montansäuren mit Ethylenglycol sowie niedermolekulare Polyethylen- bzw. Polypropylenwachse in oxidierter und nicht-oxidierter Form. Erfindungsgemäß besonders bevorzugte Gleit- und/oder Entformungsmittel sind in der Gruppe der Ester oder Amide gesättigter oder ungesättigter aliphatischer Carbonsäuren mit 8 bis 40 C-Atomen mit gesättigten aliphatischen Alkoholen oder Aminen mit 2 bis 40 C-Atomen enthalten. In einer weiteren bevorzugten Ausführungsform enthalten die erfindungsgemäßen Zusammensetzungen bzw. Formmassen Mischungen der oben genannten Gleit- und/oder Entformungsmittel. Als Entformungsmittel vorzugsweise einzusetzende Montanesterwachse, auch kurz als Montanwachse [CAS Nr. 8002-53-7] bezeichnet, sind Mischungen aus geradkettigen, gesättigten Carbonsäuren mit Kettenlängen im Bereich von 28 bis 32 C-Atomen. Entsprechende Montanesterwachse werden von Clariant International Ltd. als Licowax® angeboten. Erfindungsgemäß insbesondere bevorzugt wird Licowax® E der Firma Clariant [Produkt ID: 105199], oder eine Mischung von Wachsen, vorzugsweise Mischungen von Esterwachsen, Amidwachsen und/oder verseiften Wachsen, gemäß EP 2607419 A1, deren Inhalt von der vorliegenden Anmeldung vollumfänglich umfasst wird, eingesetzt.

Die vorliegende Erfindung betrifft vorzugsweise Zusammensetzungen enthaltend A) PA 66, B) Eisen(III)citrat, C) Dipentaerythritol, D) Glasfasern, sowie daraus herzustellende Formmassen und Erzeugnisse.

Die vorliegende Erfindung betrifft vorzugsweise Zusammensetzungen enthaltend A) PA 66, B) Natriumcitrat, C) Dipentaerythritol, D) Glasfasern, sowie daraus herzustellende Formmassen und Erzeugnisse.

Die vorliegende Erfindung betrifft vorzugsweise Zusammensetzungen enthaltend A) PA 66, B) Eisen(III)citrat, C) Dipentaerythritol, D) Glasfasern, E) Kupfer(I)iodid, sowie daraus herzustellende Formmassen und Erzeugnisse.

Die vorliegende Erfindung betrifft vorzugsweise Zusammensetzungen enthaltend A) PA 66, B) Natriumcitrat, C) Dipentaerythritol, D) Glasfasern, E) Kupfer(I)iodid, sowie daraus herzustellende Formmassen und Erzeugnisse.

Die vorliegende Erfindung betrifft vorzugsweise Zusammensetzungen enthaltend A) PA 66, B) Eisen(III)citrat, C) Dipentaerythritol, D) Glasfasern, E) Kupfer(I)iodid, F) Kaliumbromid sowie daraus herzustellende Formmassen und Erzeugnisse.

Die vorliegende Erfindung betrifft vorzugsweise Zusammensetzungen enthaltend A) PA 66, B) Natriumcitrat, C) Dipentaerythritol, D) Glasfasern, E) Kupfer(I)iodid, F) Kaliumbromid sowie daraus herzustellende Formmassen und Erzeugnisse.

Die vorliegende Erfindung betrifft vorzugsweise Zusammensetzungenenthaltend A) PA 66, B) Eisen(III)citrat, C) Dipentaerythritol, D) Glasfasern, E) Kupfer(I)iodid, F) Kaliumbromid, G) Montanesterwachs, vorzugsweise Licowax E, sowie daraus herzustellende Formmassen und Erzeugnisse.

Die vorliegende Erfindung betrifft vorzugsweise Zusammensetzungenenthaltend A) PA 66, B) Natriumcitrat, C) Dipentaerythritol, D) Glasfasern, E) Kupfer(I)iodid, F) Kaliumbromid, G) Montanesterwachs, vorzugsweise Licowax E, sowie daraus herzustellende Formmassen und Erzeugnisse.

Die vorliegende Erfindung betrifft vorzugsweise Zusammensetzungen enthaltend A) PA 6, B) Eisen(III)citrat, C) Dipentaerythritol, D) Glasfasern, sowie daraus herzustellende Formmassen und Erzeugnisse.

Die vorliegende Erfindung betrifft vorzugsweise Zusammensetzungen enthaltend A) PA 6, B) Natriumcitrat, C) Dipentaerythritol, D) Glasfasern, sowie daraus herzustellende Formmassen und Erzeugnisse.

Die vorliegende Erfindung betrifft vorzugsweise Zusammensetzungen enthaltend A) PA 6, B) Eisen(III)citrat, C) Dipentaerythritol, D) Glasfasern, E) Kupfer(I)iodid, sowie daraus herzustellende Formmassen und Erzeugnisse.

Die vorliegende Erfindung betrifft vorzugsweise Zusammensetzungen enthaltend A) PA 6, B) Natriumcitrat, C) Dipentaerythritol, D) Glasfasern, E) Kupfer(I)iodid, sowie daraus herzustellende Formmassen und Erzeugnisse.

Die vorliegende Erfindung betrifft vorzugsweise Zusammensetzungen enthaltend A) PA 6, B) Eisen(III)citrat, C) Dipentaerythritol, D) Glasfasern, E) Kupfer(I)iodid, F) Kaliumbromid sowie daraus herzustellende Formmassen und Erzeugnisse.

Die vorliegende Erfindung betrifft vorzugsweise Zusammensetzungen enthaltend A) PA 6, B) Natriumcitrat, C) Dipentaerythritol, D) Glasfasern, E) Kupfer(I)iodid, F) Kaliumbromid sowie daraus herzustellende Formmassen und Erzeugnisse.

Die vorliegende Erfindung betrifft vorzugsweise Zusammensetzungenenthaltend A) PA 6, B) Eisen(III)citrat, C) Dipentaerythritol, D) Glasfasern, E) Kupfer(I)iodid, F) Kaliumbromid, G) Montanesterwachs, vorzugsweise Licowax E, sowie daraus herzustellende Formmassen und Erzeugnisse.

Die vorliegende Erfindung betrifft vorzugsweise Zusammensetzungenenthaltend A) PA 6, B) Natriumcitrat, C) Dipentaerythritol, D) Glasfasern, E) Kupfer(I)iodid, F) Kaliumbromid, G) Montanesterwachs, vorzugsweise Licowax E, sowie daraus herzustellende Formmassen und Erzeugnisse.

### Verfahren

Ferner ist Gegenstand der vorliegenden Erfindung ein Verfahren zur Herstellung erfindungsgemäßer Zusammensetzungen in Form von Formmassen und daraus herzustellender Erzeugnisse, indem man die Komponenten A) bis D) sowie gegebenenfalls noch wenigstens ein Vertreter der Komponenten E), F) und G) in entsprechenden Gewichtsanteilen in wenigstens einem Mischaggregat mischt. Vorzugsweise geschieht das Mischen der Komponenten bei Temperaturen im Bereich von 220 bis 400°C durch gemeinsames Vermengen, Vermischen, Kneten, Extrudieren oder Verwalzen. Bevorzugte Mischaggregate sind auszuwählen aus Compounder, gleichläufigen Zweiwellenextruder oder Buss-Kneter. Es kann vorteilhaft sein, einzelne Komponenten vorzumischen. Als Compound werden Gemische aus Grundstoffen bezeichnet, denen zusätzliche Füllstoffe, Verstärkungsstoffe oder andere Additive beigemischt worden sind. Eine Lösung der einzelnen Grundstoffe untereinander findet dabei nicht statt. Durch die Compoundierung werden somit mindestens zwei Stoffe miteinander zu einer homogenen Mischung verbunden. Ziel der Compoundierung ist es, die Eigenschaften der Grundstoffe auf einen Anwendungsfall hin zu modifizieren. Als besondere Herausforderung gilt es, eine über die Zeit mögliche Entmischung des Compounds zu vermeiden. Den Vorgang zum Herstellen eines Compounds nennt man Compoundierung.

In einer bevorzugten Ausführungsform werden die erfindungsgemäßen Formmassen in einem zweistufigen Prozess hergestellt. Im ersten Schritt wird die Komponente B) mit Komponente A) zu einer Vormischung vermischt. Es können auch andere Komponenten in diesem ersten Schritt mit der Komponente B) und der Komponente A) vermischt werden. Bevorzugt wird dieser erste Schritt in einem gleichläufigen Zweiwellenextruder, Buss-Kneter oder Planetwalzenextruder durchgeführt. Vorzugsweise sind diese Mischer mit einer Entgasungsfunktion ausgestattet, um die bei der Umsetzung der Komponente B) entstehenden gasförmigen Komponenten abzuführen.

Die Vormischung enthält im ersten Schritt in einer bevorzugten Ausführungsform neben den beiden Komponenten A) und B) zusätzlich mindestens einen Verarbeitungsstabilisator. Als Verarbeitungsstabilisator werden bevorzugt sterisch gehinderte Phenole und/oder Phosphite, Phosphate, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen eingesetzt.

In der aus dem ersten Schritt erhältlichen Vormischung liegt der Anteil der Komponente B) bevorzugt in einem Bereich von 1 bis 60 Gew.-% vor, besonders bevorzugt in einem Bereich von 1 bis 30 Gew.-%, ganz besonders bevorzugt in einem Bereich von 2 bis 20 Gew.-%.

Alternativ kann die Komponente B) in einem geeigneten Stoff der Komponente G) in einem Zweiwellenextruder, Buss-Kneter oder einem anderen Mischaggregat umgesetzt werden, der dazu geeignet ist, die Mischung auf Temperaturen oberhalb der Umsetzungstemperatur der Komponente B) zu erhitzen. Auch ein diskontinuierliches Verfahren, bevorzugt in einem Rührautoklaven, ist im ersten Schritt anwendbar.

In einer alternativen bevorzugten Ausführungsform wird die Komponente B) in Kombination mit einer oder mehreren Verbindungen eingesetzt, die die Umsetzungsgeschwindigkeit der Komponente B) erhöhen. Dies hat zur Folge, dass die Umsetzung der Komponente B) bei niedrigeren Temperaturen möglich ist. Derartige Verbindungen, auch als Aktivatoren bezeichnet, sind beispielsweise in US-A 4438223 beschrieben, deren Inhalt von der vorliegenden Erfindung vollumfänglich mit umfasst wird. Bevorzugt wird in diesem Fall als Aktivator wenigstens eine Verbindung der Reihe Natrium- oder Kaliumhydrogencarbonat, Natrium- oder Kaliumacetat, Natrium- oder Kaliumcarbonat, Natrium- oder Kaliumchlorid, Natrium- oder Kaliumbromid, Natrium- oder Kaliumiodid, Natrium- oder Kaliumrhodanid oder Natrium- oder Kaliumbenzoat eingesetzt.

Im zweiten Schritt wird die Vormischung aus dem ersten Schritt mit den restlichen Komponenten nach den oben beschriebenen Verfahren vermischt.

Nach dem Mischen werden als Formmassen vorliegende Zusammensetzungen dann vorzugsweise zu einem Strang ausgetragen, bis zur Granulierfähigkeit abkühlt und granuliert. In einer Ausführungsform wird das Granulat, das die erfindungsgemäße Zusammensetzung enthält, getrocknet, bevorzugt bei Temperaturen im Bereich von 110 bis 130°C, besonders bevorzugt um 120°C, im Vakuumtrockenschrank oder im Trockenlufttrockner, vorzugsweise für eine Zeitdauer im Bereich von bis zu 2h, bevor es als Matrixmaterial einem Spritzguss, einem Blasformvorgang oder einem Extrusionsverfahren zur Herstellung erfindungsgemäßer Erzeugnisse unterzogen wird.

Die vorliegende Erfindung betrifft deshalb auch ein Verfahren zur Herstellung von Erzeugnissen indem erfindungsgemäße Zusammensetzungen vermischt, zu einer Formmasse in Form eines Strangs ausgetragen, bis zur Granulierfähigkeit abgekühlt und granuliert und als Matrixmaterial einem Spritzguss, einem Blasformvorgang oder einer Extrusion, bevorzugt einem Spritzguss unterzogen werden.

Es kann vorteilhaft sein, sogenannte Halbzeuge aus einer bei Raumtemperatur, vorzugsweise bei einer Temperatur im Bereich von 0 bis 40°C, hergestellten physikalischen Mischung, einem sogenannten Dryblend, vorgemischter Komponenten und/oder einzelner Komponenten direkt herzustellen. Halbzeuge im Sinne der vorliegenden Erfindung sind vorgefertigte Gegenstände und entstehen in einem ersten Schritte im Herstellungsprozess eines Erzeugnisses. Halbzeuge im Sinne der vorliegenden Erfindung sind keine Schüttgüter, Granulate oder Pulver, weil es sich, anders als bei Halbzeugen, nicht um geometrisch bestimmte, feste Körper handelt und damit noch keine "Halb-Fertigstellung" des finalen Erzeugnisses erfolgt ist. Siehe:http://de.wikipedia.org/wiki/Halbzeug.

Die Verfahren des Spritzgusses, des Blasformens sowie der Extrusion thermoplastischer Formmassen sind dem Fachmann bekannt.

Erfindungsgemäße Verfahren zur Herstellung von Polyamid basierten Erzeugnissen durch Extrusion oder Spritzguss werden bei Schmelzetemperaturen im Bereich von 240 bis 330°C, bevorzugt im Bereich von 260 bis 310°C, besonders bevorzugt im Bereich von 270 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Das Blasformen (siehe: http://de.wikipedia.org/wiki/Blasformen) ist ein Verfahren zur Herstellung von Hohlkörpern aus thermoplastischen Kunststoffen und zählt zu den Spritzgießsonderverfahren. Zum Blasformen wird ein sogenannter Vorformling benötigt, welcher in einem vorangeschalteten Arbeitsschritt durch konventionelles Spritzgießen hergestellt wird. Beim eigentlichen Blasformverfahren wird dieser Vorformling im ersten Prozessschritt aufgeheizt. Hierbei kommen vor allem Infrarot-Strahler zum Einsatz, da sie neben einer guten Automatisierbarkeit eine hohe Leistungsfähigkeit besitzen und viel Wärmeenergie in das Halbzeug bringen. Nach dem Erwärmen wird der Vorformling in das Werkzeug gefahren, alternativ werden die Heizer - je nach Maschinenbauart - aus dem Werkzeug gefahren. Durch das Schließen des Werkzeugs kommt es am Flaschenhals zur Längsverstreckung, wodurch der Vorformling axial gehalten wird und zudem eine mediendichte Fixierung entsteht. Daraufhin wird ein Gas in den Vorformling eingeleitet, der sich unter der Druckbeanspruchung ausdehnt und dabei die Werkzeugkontur abbildet. Aus wirtschaftlichen und ökologischen Aspekten wird als Gas häufig Druckluft eingesetzt. Nach dem Aufblasen kühlt der erzeugte Hohlkörper im Werkzeug ab, bis er genügend Formsteifigkeit besitzt und ausgeworfen werden kann.

Die erfindungsgemäß aus den Formmassen herzustellenden Erzeugnisse können bevorzugt für Anwendungen eingesetzt werden, für die eine hohe Stabilität gegen Wärmealterung erforderlich ist vorzugsweise in der Kraftfahrzeug-, Elektro-, Elektronik-, Telekommunikations-, Solar-, Informationstechnologie-, Computer-Industrie, im Haushalt, Sport, in der Medizin oder in der Unterhaltungsindustrie. Bevorzugt für derartige Anwendungen ist die Verwendung für Erzeugnisse in Fahrzeugen, besonders bevorzugt in Kraftfahrzeugen (KFZ), insbesondere im KFZ-Motorraum. Die vorliegende Erfindung betrifft deshalb auch die Verwendung thermoplastischer Formmassen enthaltend die oben genannten Zusammensetzungen zur Herstellung von Erzeugnissen mit erhöhter Stabilität gegen thermooxidative Schädigung und/oder photooxidativer Schädigung, bevorzugt von Erzeugnissen für Kraftfahrzeuge (KFZ), insbesondere bevorzugt von Erzeugnissen für den Motorraum von KFZs. Die erfindungsgemäßen Formmassen sind außerdem auch für Anwendungen bzw. Formteile oder Artikel geeignet, wo zusätzlich zur thermooxidativen Stabilität eine Stabilität gegenüber photooxidativer Schädigung erforderlich ist, bevorzugt Solaranlagen.

In einer bevorzugten Ausführungsform handelt es sich bei den erfindungsgemäß herzustellenden Erzeugnissen um Halbzeuge in Form thermostabilisierter Composites auf Basis von Endlosfasern, auch als Organobleche bezeichnet, aber auch um umspritzte oder überspritzte Composite Strukturen. Die erfindungsgemäßen Zusammensetzungen bzw. das erfindungsgemäße Thermostabilisatorsystem kann entweder in der Thermoplastmatrix der Compositestruktur oder in der zu verspritzenden Formmasse oder in beiden Komponenten eingesetzt werden bzw. darin enthalten sein. Thermostabilisierte Composites sind beispielsweise aus WO 2011 / 014754 A1 bekannt, überspritzte Composite Strukturen werden beispielsweise in der WO 2011 /014751 A1 beschrieben. Die Erfindung betrifft ferner die Verwendung der erfindungsgemäßen Zusammensetzungen zur Herstellung erfindungsgemäßer Erzeugnisse in Form von Fasern, Folien oder Formkörpern, vorzugsweise Composite Strukturen sowie überspritzte Composite Strukturen. Die Erzeugnisse in Form von Fasern, Folien, Formkörpern Composite Strukturen oder überspritzten Composite Strukturen wiederum finden als Halbzeuge Anwendung in Artikeln für die Kraftfahrzeug-, Elektro-, Elektronik-, Telekommunikations-, Informationstechnologie-, Solar-, Computerindustrie, für den Haushalt, für den Sport, für medizinische Anwendungen oder für die Unterhaltungsindustrie, besonders bevorzugt für in Artikeln für die Kraftfahrzeuge, ganz besonders bevorzugt in Artikeln für den Motorraum von Kraftfahrzeugen.

Die vorliegende Erfindung betrifft zudem die Verwendung erfindungsgemäßer Zusammensetzungen als Formmassen zur Herstellung von Erzeugnissen in Form von Fasern, Folien oder Formkörpern jeglicher Art, vorzugsweise als Matrixmaterial zur Herstellung von Composite Strukturen sowie überspritzten Composite Strukturen.

Die vorliegende Erfindung betrifft aber auch ein Verfahren zur Thermostabilisierung von Polyamiden und daraus herzustellender Erzeugnisse in Form von Fasern, Folien oder Formkörpern, vorzugsweise Composite Strukturen sowie überspritzte Composite Strukturen, indem man ein Stabilisatorsystem aus wenigstens einem Salz der Zitronensäure und Dipentaerythritol einsetzt, vorzugsweise ein Stabilisatorsystem aus wenigstens einem Salz der Zitronensäure, Dipentaerythritol, Kupfer(I)iodid und Kaliumbromid oder vorzugsweise ein Stabilisatorsystem aus wenigstens einem Salz der Zitronensäure, Dipentaerythritol, Kupfer(I)iodid und Kaliumbromid oder Kaliumiodid.

Die vorliegende Anmeldung betrifft aber auch ein Verfahren zur Verringerung photooxidativer Schädigungen und/oder thermooxidativer Schädigungen von Polyamiden bzw. daraus herzustellender Erzeugnisse in Form von Folien, Fasern oder Formteilen, vorzugsweise Composite Strukturen sowie überspritzte Composite Strukturen, indem man als Stabilisatorsystem wenigstens ein Salz der Zitronensäure und Dipentaerythritol einsetzt, vorzugsweise ein Stabilisatorsystem aus wenigstens einem Salz der Zitronensäure, Dipentaerythritol, Kupfer(I)iodid und Kaliumiodid, oder vorzugsweise ein Stabilisatorsystem aus wenigstens einem Salz der Zitronensäure, Dipentaerythritol, Kupfer(I)iodid und Kaliumbromid oder Kaliumiodid.

### Beispiele

Zum Nachweis der Vorteile erfindungsgemäßer Zusammensetzungen und daraus herzustellender Formmassen wurde zunächst eine Vormischung mit 10% Eisen(III)citrat und anschließend die Polyamid-Formmassen hergestellt. Bei Angaben in [%] handelt es sich stets um Gewichtsprozent.

### Herstellung der Polyamid-Formmassen

Die einzelnen in Tabelle 1 genannten Komponenten wurden in einem Zweiwellenextruder des Typs ZSK 26 Compounder der Firma Coperion Werner & Pfleiderer (Stuttgart, Deutschland) bei einer Temperatur von ca. 290°C gemischt, als Strang in ein Wasserbad ausgetragen, bis zur Granulierfähigkeit abgekühlt und granuliert. Das Granulat wurde zwei Tage bei 70°C im Vakuumtrockenschrank getrocknet.

Für Beispiel 7 wurde zunächst eine Vormischung von PA66 mit Eisen(III)citrat und anschließend die Formmasse hergestellt.

Herstellung einer Vormischung mit 10% Eisen(III)citrat 10 Gew.-% Eisen(III)citrat wurden mit 90 Gew.-% eines Polyamids PA66 in einem Zweiwellenextruder des Typs ZSK 26 Compounder der Firma Coperion Werner & Pfleiderer (Stuttgart, Deutschland) bei einer Temperatur von ca. 290°C gemischt, als Strang in ein Wasserbad ausgetragen, bis zur Granulierfähigkeit abgekühlt und granuliert. Das Granulat wurde zwei Tage bei 80°C in einem Vakuumtrockenschrank getrocknet.

### Spritzguss:

Anschließend wurden die erhaltenen Granulate auf einer Spritzgussmaschine Arburg 520 C 2000-350 bei einer Massetemperatur von 290°C und einer Formtemperatur von 80°C zu Prüfkörpern (Schulterstäbe 180 mm x 10 mm x 4 mm gemäß ISO 528 und Flachstäbe 80 mm x 10 mm x 4 mm) verspritzt.

### Alterung und Prüfung:

Ein Teil der erhaltenen Prüfkörper wurden in Zugversuchen gemäß ISO 527 und Schlagversuchen gemäß ISO 180-1 U bei 23°C geprüft. Ein weiterer Teil der Prüfkörper wurde in einem Umlufttrockenschrank bei 210°C bzw. 220°C jeweils für 504 h und 1008 h gelagert. Anschließend wurden die so gealterten Probekörper wieder auf 23°C abgekühlt und ebenfalls gemäß den oben genannten Normen geprüft.

**Tabelle 1: Zusammensetzungen der Formmassen (alle Angaben in Gew.-%).**

| **Inhaltsstoff** | **Vgl**. **Bsp.1** | **Vgl**. **Bsp.2** | **Vgl**. **Bsp.3** | **Vgl**. **Bsp.4** | **Bsp.1** | **Bsp.2** | **Bsp.3** | **Bsp.4** | **Bsp.5** | **Bsp.6** | **Bsp.7** |
|---|---|---|---|---|---|---|---|---|---|---|---|
| Glasfaser | 35,00 | 35,00 | 35,00 | 35,00 | 35,00 | 35,00 | 35,00 | 35,00 | 30,00 | 30,00 | 30,00 |
| PA66 | 61,70 | 59,70 | 61,86 | 59,86 | 59,86 | 59,86 | 59,72 | 59,72 | 64,72 | 64,72 | 37,72 |
| Montanesterwachs | 0,30 | 0,30 | 0,14 | 0,14 | 0,14 | 0,14 | 0,14 | 0,14 | 0,14 | 0,14 | 0,14 |
| Kaliumbromid | | | | | | | 0,10 | 0,10 | 0,10 | 0,10 | 0,10 |
| Kupfer(I)iodid | | | | | | | 0,04 | 0,04 | 0,04 | 0,04 | 0,04 |
| Dipentaerythritol | | | | | 2,00 | 2,00 | 2,00 | 2,00 | 2,00 | 2,00 | 2,00 |
| Natriumcitrat | 3,00 | 5,00 | 3,00 | 5,00 | 3,00 | | 3,00 | | 3,00 | | |
| Eisen(III)citrat | | | | | | 3,00 | | 3,00 | | 3,00 | |
| Vormischung 10% Eisencitrat in PA66 | | | | | | | | | | | 30,00 |

**Tabelle 2: Zusammensetzungen der Formmassen (alle Angaben in Gew.-%) und Angaben zum Alterungsverhalten.**

| **Inhaltsstoff** | **Vgl. Bsp.5** | **Bsp. 8** | **Bsp. 9** |
|---|---|---|---|
| PA66 | 63,700 | 61,700 | 61,567 |
| Glasfaser | 35,000 | 35,000 | 35,000 |
| Montanesterwachs | 0,300 | 0,300 | 0,300 |
| Kaliumbromid | | | 0,098 |
| Kupfer(I)iodid | | | 0,035 |
| Dipentaerythritol | | 2,000 | 2,000 |
| Eisen(III)citrat | 1,000 | 1,000 | 1,000 |
| | | | |
| **Eigenschaften ungealtert** | | | |
| Bruchspannung [MPa] | 202 | 191 | 197 |
| E-Modul [MPa] | 11363 | 11406 | 11131 |
| Bruchdehnung [%] | 3,2 | 3,1 | 3,0 |
| Schlagzähigkeit Izod [kJ/m²] | 74 | 70 | 73 |
| | | | |
| **Eigenschaften nach 504 h bei 210°C** | | | |
| Bruchspannung [MPa] | 170 | 215 | 213 |
| Relativer Erhalt der Bruchspannung | 84% | 113% | 108% |
| E-Modul [MPa] | 11791 | 12078 | 12225 |
| Bruchdehnung [%] | 2,0 | 3,2 | 2,9 |
| Schlagzähigkeit Izod [kJ/m²] | 21 | 48 | 55 |
| | | | |
| **Eigenschaften nach 1008 h bei 210°C** | | | |
| Bruchspannung [MPa] | 80 | 105 | 146 |
| Relativer Erhalt der Bruchspannung | 40% | 55% | 74% |
| E-Modul [MPa] | 8145 | 9425 | 11127 |
| Bruchdehnung [%] | 1,5 | 1,6 | 1,7 |
| Schlagzähigkeit Izod [kJ/m²] | 14 | 27 | 30 |
| | | | |
| **Eigenschaften nach 504 h bei 220°C** | | | |
| Bruchspannung [MPa] | 169 | 186 | 199 |
| Relativer Erhalt der Bruchspannung | 84% | 97% | 101% |
| E-Modul [MPa] | 11573 | 12055 | 12221 |
| Bruchdehnung [%] | 2,1 | 2,2 | 2,5 |
| Schlagzähigkeit Izod [kJ/m²] | 14 | 24 | 28 |
| | | | |
| **Eigenschaften nach 1008 h bei 220°C** | | | |
| Bruchspannung [MPa] | 97 | 114 | 141 |
| Relativer Erhalt der Bruchspannung | 48% | 60% | 72% |
| E-Modul [MPa] | 10924 | 11090 | 11644 |
| Bruchdehnung [%] | 1,2 | 1,3 | 1,5 |
| Schlagzähigkeit Izod [kJ/m²] | 14 | 24 | 28 |

| | | | |
|---|---|---|---|
| Verwendete Materialien: PA66: Polyamid 66, z. B. Vydyne® 50 BWFS von Ascend Performance Materials LLC Montanesterwachs, z.B. Licowax^{®} E von Clariant GmbH Glasfasern, z.B. CS7928 von Lanxess Deutschland GmbH Kaliumbromid, d₉₉ < 70 µm Kupfer(I)-Iodid, d₉₉ < 70 µm Eisen(III)citrat [CAS Nr. 3522-50-7] z.B. von Sigma-Aldrich Mononatriumcitrat [CAS Nr. 18996-35-5] z.B. von Sigma-Aldrich Dipentaerythritol [CAS Nr. 126-58-9] DiPenta93 der Perstorp Service GmbH | | | |

## Patentansprüche

1. Zusammensetzungen enthaltend
A) wenigstens ein Polyamid oder Copolyamid,
B) wenigstens ein Salz der Zitronensäure,
C) Dipentaerythritol, und
D) wenigstens einen Füll- oder Verstärkungsstoff.

2. Zusammensetzungen gemäß Anspruch 1, **dadurch gekennzeichnet, dass** diese zusätzlich zu den Komponenten A) bis D) noch E) wenigstens einen weiteren Thermostabilisator enthalten.

3. Zusammensetzungen gemäß Anspruch 2, **dadurch gekennzeichnet, dass** diese zusätzlich zu den Komponenten A) bis E) noch F) wenigstens ein Alkalimetallhalogenid enthalten.

4. Zusammensetzungen gemäß einem der Ansprüche 1 bis 3, **dadurch gekennzeichnet, dass** zusätzlich zu den Komponenten A) bis F) oder anstelle der Komponenten E) und/oder F) noch G) wenigstens ein weiteres Additiv enthalten.

5. Zusammensetzungen gemäß einem der Ansprüche 2 bis 4, **dadurch gekennzeichnet, dass** als Thermostabilisator E) wenigstens ein Kupfer(I)halogenid eingesetzt wird, bevorzugt wenigstens Kupfer(I)iodid.

6. Zusammensetzungen gemäß einem der Ansprüche 3 bis 5, **dadurch gekennzeichnet, dass** als Alkalimetallhalogenide F) Alkalimetallchloride, Alkalimetallbromide oder Alkalimetalliodide eingesetzt werden.

7. Zusammensetzungen gemäß Anspruch 6, **dadurch gekennzeichnet, dass** als Alkalimetalle Natrium oder Kalium eingesetzt werden.

8. Zusammensetzungen gemäß der Ansprüche 6 oder 7, **dadurch gekennzeichnet, dass** Natriumchlorid, Kaliumbromid oder Kaliumiodid eingesetzt werden, bevorzugt Kaliumiodid oder Kaliumbromid, insbesondere Kaliumbromid.

9. Zusammensetzungen gemäß einem der Ansprüche 4 bis 8, **dadurch gekennzeichnet, dass** als weiteres Additiv der Komponente G) wenigstens eine Substanz aus der Gruppe der Thermostabilisatoren verschieden von Komponenten B) und E), UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren, Gleitmittel, Entformungsmittel, Farbstoffe und Pigmente eingesetzt wird.

10. Zusammensetzungen gemäß einem der Ansprüche 1 bis 9, **dadurch gekennzeichnet, dass** als Füll- und Verstärkungsstoffe faserförmige, nadelförmige oder teilchenförmige Füll- und Verstärkungsstoffe eingesetzt werden, vorzugsweise Kohlenstofffasern, Glaskugeln, gemahlenes Glas, amorphe Kieselsäure, Calciumsilicat, Calciummetasilicat, Magnesiumcarbonat, Kaolin, calciniertes Kaolin, Kreide, gepulverter oder gemahlener Quarz, Glimmer, Phlogopit, Bariumsulfat, Feldspat, Wollastonit, Montmorillonit, oder Glasfasern.

11. Zusammensetzungen gemäß Anspruch 10, **dadurch gekennzeichnet, dass** Glasfasern mit kreisförmiger Querschnittsfläche und einem Filament-Durchmesser im Bereich von 6 bis 11 µm oder Glasfasern mit flacher Gestalt und nichtkreisförmiger Querschnittsfläche eingesetzt werden, deren Hauptquerschnittsachse eine Breite im Bereich von 6 bis 40 µm und deren Nebenquerschnittsachse eine Breite im Bereich von 3 bis 20 µm aufweist, wobei Querschnittsfläche bzw. Filament-Durchmesser durch wenigstens ein optisches Verfahren in Analogie zu DIN 65571 bestimmt werden.

12. Zusammensetzungen gemäß Anspruch 1 sowie daraus herzustellende Formmassen und Erzeugnisse, **dadurch gekennzeichnet, dass** diese die Komponente A) im Bereich von 15 bis 94,85 Gew.-%, die Komponente B) im Bereich von 0,05 bis 10 Gew.-%, die Komponente C) im Bereich von 0,1 bis 5 Gew.-% und die Komponente D) im Bereich von 5 bis 70 Gew.-% enthalten, wobei die Summe aller Gewichtsprozente stets 100 ergibt.

13. Verfahren zur Herstellung von Zusammensetzungen in Form von Formmassen und daraus herzustellender Erzeugnisse, **dadurch gekennzeichnet, dass** man die Komponenten der Zusammensetzungen gemäß einem der Ansprüche 1 bis 12 in entsprechenden Gewichtsanteilen mischt.

14. Verwendung der Zusammensetzungen gemäß einem der Ansprüche 1 bis 12 als Formmassen zur Herstellung von Erzeugnissen in Form von Fasern, Folien oder Formkörpern jeglicher Art, vorzugsweise zur Herstellung von Composite Strukturen sowie überspritzten Composite Strukturen.

15. Verfahren zur Thermostabilisierung von Polyamiden und daraus herzustellender Erzeugnisse in Form von Fasern, Folien oder Formkörpern, **dadurch gekennzeichnet, dass** man ein Stabilisatorsystem aus wenigstens einem Salz der Zitronensäure und Dipentaerythritol einsetzt, vorzugsweise ein Stabilisatorsystem aus wenigstens einem Salz der Zitronensäure, Dipentaerythritol und Kupfer(I)iodid.
